(19) **Europäisches Patentamt**
**European Patent Office**
**Office européen des brevets**

(11) **EP 3 068 814 B1**

(12) **FASCICULE DE BREVET EUROPEEN**

(45) Date de publication et mention de la délivrance du brevet:
**08.08.2018 Bulletin 2018/32**

(51) Int Cl.:
**C08F 285/00** (2006.01) **C09D 151/00** (2006.01)

(21) Numéro de dépôt: **14814919.8**

(22) Date de dépôt: **12.11.2014**

(86) Numéro de dépôt international:
**PCT/FR2014/052878**

(87) Numéro de publication internationale:
**WO 2015/071590 (21.05.2015 Gazette 2015/20)**

(54) **DISPERSION AQUEUSE DE POLYMERE A BASE DE PARTICULES MULTISTRUCTUREES POUR REVETEMENTS AQUEUX A RESISTANCE AU BLOCKING ET A L'EMPREINTE ET AVEC UNE DURETE AMELIOREES**

WÄSSRIGE POLYMERDISPERSION AUS MULTISTRUKTURIERTEN PARTIKELN FÜR WÄSSRIGE BESCHICHTUNGEN MIT VERBESSERTER BLOCKIERUNGS- UND FINGERABDRUCK-RESISTENZ UND HÄRTE

AQUEOUS DISPERSION OF POLYMER MADE FROM MULTISTRUCTURED PARTICLES FOR AQUEOUS COATINGS HAVING IMPROVED BLOCKING AND FINGERPRINT RESISTANCE AND HARDNESS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.11.2013 FR 1361206**

(43) Date de publication de la demande:
**21.09.2016 Bulletin 2016/38**

(73) Titulaire: **Arkema France**
**92700 Colombes (FR)**

(72) Inventeurs:
• **BETREMIEUX, Isabelle**
  **F-60580 Coye la Foret (FR)**
• **BOONE, Alain**
  **F-60140 Verderonne (FR)**
• **LOZE, Jean-Yves**
  **F-27300 Saint Victor de Chretienville (FR)**

(74) Mandataire: **Killis, Andréas**
**ARKEMA France**
**Département Propriété Industrielle**
**420, rue d'Estienne d'Orves**
**92705 Colombes Cedex (FR)**

(56) Documents cités:
**WO-A2-2008/028062        JP-B- 3 353 351**
**US-A1- 2011 218 291**

**Description**

La présente invention concerne des dispersions aqueuses de polymère avec des particules multi-structurées de structure et de composition spécifique.

Les dispersions de l'invention permettent une parfaite formation du film lors de la coalescence avec un film homogène et ayant une cohésion élevée du fait de la structure contrôlée des particules formées et de leur parfaite reproductibilité et prédictibilité de la TMF par ce fait. Cet excellent contrôle permet en conséquence des performances mécaniques et autres excellentes, en particulier en termes de résistances chimique et mécanique, en particulier en dureté, adhérence, abrasion humide et la résistance au blocking et à l'empreinte. La résistance à l'empreinte signifie ici et pour la suite, la capacité du revêtement à ne pas présenter, ni de marque, ni de collant, lorsqu'une forte pression est exercée sur le film de revêtement.

La demande WO 2011/009560 décrit des dispersions aqueuses stables ayant des particules structurées biphasiques coeur/écorce avec un coeur P1 dur de Tg1 de 60 à 120°C et une écorce P2 molle de Tg2 de -20 à 40°C et une TMF de 0 à 50°C avec P1 représentant de 15 à 60% sur P1 + P2 pour des applications dans les revêtements aqueux, en particulier autoréticulables. Malgré la très bonne aptitude à la filmification et le contrôle de ce processus avec une bonne reproductibilité de la filmification et des performances, ces dispersions ont des performances insuffisantes pour certaines applications, en particulier en termes de dureté, résistances au blocking et à l'empreinte avec une meilleure cohésion et résistance mécanique du film obtenu. Plus particulièrement, la dureté et les résistances au blocking et à l'empreinte de ce type de revêtements sont insuffisantes (trop mous malgré le renforcement par le coeur dur) pour certaines applications nécessitant de telles performances, en particulier dans les applications industrielles où les objets lourds revêtus (portes, fenêtres, meubles, tôles) sont rapidement empilés après application du revêtement ou les applications décoratives qui nécessitent une bonne résistance à la chaleur (cuisines, salles de bain) ou une bonne résistance à l'empreinte (peintures murales haute tenue, résistantes à la rayure et à l'abrasion).

En fait, WO 2011/009560 décrit la structuration d'une particule de latex en coeur dur écorce molle selon un procédé spécifique. Une telle structure conduit à un film (revêtement) polymère qui se comporte comme se comporterait une phase molle caoutchouteuse renforcée par une dispersion idéalement réalisée de particules organiques dures qui jouent la fonction de nano-charges de renfort et qui sont synthétisées in situ en première étape. Le film ainsi obtenu est flexible (phase molle continue) et le renforcement mécanique par les inclusions régulières de nano-charges organiques dures (coeur) se traduit par une contrainte en traction qui croit avec l'allongement, représentatif d'un renforcement progressif. La phase molle est la phase continue et de ce fait la qualité de la filmification est très bonne avec un film homogène. Les propriétés mécaniques du film, obtenues grâce à la parfaite formation de film, sont stables dans le temps avec une bonne durabilité. Le procédé décrit permet d'obtenir une TMF prédictible, reproductible et stable dans le temps. Cependant, suivant les conditions d'applications industrielles, les niveaux exigés de dureté et de résistance au blocking ou à l'empreinte sont difficiles à atteindre avec une particule à écorce molle qui constitue in fine la phase continue du film.

WO2008/028062 décrit des compositions de polymère latex multi séquencé comprenant un polymère de semence, un polymère de coeur et un polymère d'écorce, lequel latex convient pour des peintures à faible taux de VOC (<50 g/l) et ayant une bonne résistance au blocking, un temps ouvert amélioré et une résistance augmentée à l'eau (au ramollissement). Pour une bonne résistance au blocking le polymère de semence et du coeur comprennent des monomères qui forment des polymères ayant un caractère dur et une Tg plus élevée pendant que le polymère d'écorce comprend des monomères ayant un caractère plus mou et une Tg plus faible. Pour améliorer le temps ouvert le latex comprend un taux convenable de monomères hydrophiles nécessaires pour retenir l'eau. Pour améliorer la résistance à l'eau (ramollissement à l'eau) des monomères hydrophobes sont greffés sur des portions hydrophiles de l'écorce ou des couches de coeur.

D'autres solutions sont également décrites avec des dispersions de polymère ayant des particules de polymère structurées, en coeur mou et écorce dure, permettant l'obtention d'une dureté et d'une résistance au blocking élevées. Cependant, de par sa structure de particule, ce type de dispersion de polymère conduit à un film qui est relativement peu cohésif car la phase continue qui est dure et réticulée cède rapidement lorsqu'elle est sollicitée. Enfin, la présence d'une écorce dure autour de la particule, lorsqu'un niveau de brillant élevé est recherché, nécessite l'utilisation d'agents de coalescence malgré la TMF basse de l'émulsion.

Pour remédier aux inconvénients de l'état de la technique, il est proposé selon la présente invention de modifier une dispersion structurée de l'état de la technique telle que décrite selon WO 2011/009560, impliquant déjà une phase P1 coeur dur et une phase P2 écorce molle, modification qui consiste en particulier à rajouter une seconde écorce phase P3, en plus de l'écorce molle P2, avec P3 étant une phase dure ou plus dure que P2, oligomérique ou pas, fonctionnalisée ou pas, modification qui permet d'atteindre facilement les propriétés visées sans perdre celles qui sont liées à structure selon WO 2011/009560 dans la mesure où les caractéristiques physicochimiques de la deuxième écorce P3 sont telles qu'elles n'empêchent pas la bonne déformation de la première écorce P2 et donc une bonne formation de film. Cette particule ainsi modifiée est alors désignée ici pour la présente invention comme une particule « multi-structurée » et en particulier ayant les 3 phases P1, P2 et P3 comme définies et donc « tri couche ». La très grande variété des choix possibles pour cette structure nouvelle à trois phases, en termes de Tg (calculé selon Fox), de % en poids des phases, de masse moléculaire et de fonctionnalisation et le procédé spécifique et sa facilité de mise en oeuvre permettent d'envisager une réponse adaptée et améliorée aux demandes et exigences spécifiques du marché suivant les applications envisagées, ceci à moindre coût et sans modification aucune des installations industrielles existantes, c'est-à-dire présentant une facilité de mise en oeuvre sur des installations existantes.

Dans le cas de cette nouvelle structure « tri-couche » P1 dur/P2 mou/P3 dur ou plus dur que P2 selon l'invention, le comportement en traction du revêtement final est, non pas celui d'un renforcement progressif, mais d'un comportement présentant un module d'Young élevé (induit par la deuxième écorce dure P3) suivi d'un constant renforcement et non pas d'une baisse ou d'une chute comme dans le cas des particules connues sur le marché de type coeur mou/écorce dure et avec une contrainte mécanique plus élevée pour un allongement donné par rapport à une dispersion P1/P2 selon WO 2011/009560. Cela permet d'atteindre des niveaux de dureté élevés et d'augmenter encore le renforcement mécanique des films tout en gardant une excellente flexibilité. Ceci signifie que les films de revêtement obtenus selon la présente invention présentent une énergie de cohésion plus élevée avec une flexibilité maintenue par rapport aux dispersions citées de l'état de la technique.

La présente invention cherche donc à mettre au point une dispersion stable, de TMF contrôlée et reproductible, pour la formulation de revêtements brillants présentant une bonne dureté et des bonnes résistances au blocking et à l'empreinte tout en conservant une bonne flexibilité, avec un très bon contrôle et reproductibilité de la filmification. De ce fait, la présente invention permet l'obtention d'un film de revêtement présentant des propriétés mécaniques renforcées avec un compromis dureté/flexibilité/cohésion difficile, sinon impossible, à obtenir avec les structures de l'état de la technique, dans les conditions standard de polymérisation radicalaire à pression atmosphérique. De ce fait, le film de revêtement présente une dureté, une résistance au blocking et à l'empreinte nettement supérieures à celles des solutions actuellement connues de l'état de la technique, pour une émulsion de TMF contrôlée.

Un premier objet de la présente invention concerne une dispersion aqueuse de polymère avec des particules de polymère multi-structurées et en particulier possédant 3 phases (couches) spécifiques de polymère, P1, P2 et P3 constituant une particule « tri-couche ».

Le deuxième objet de l'invention concerne un procédé spécifique de préparation de ladite dispersion avec des étapes spécifiques.

Ensuite, l'invention couvre une composition de dispersion aqueuse de polymère qui comprend au moins une dispersion aqueuse de polymère selon l'invention.

Fait également partie de l'invention une composition de revêtement qui comprend au moins une dispersion aqueuse de polymère ou au moins une composition de dispersion aqueuse de polymère comme définies selon l'invention.

L'invention couvre également l'utilisation d'une dispersion telle que définie selon l'invention en tant que liant organique pour revêtements aqueux et en dernier un revêtement qui résulte de l'utilisation de ladite dispersion ou de ladite composition de dispersion.

Donc, le premier objet de l'invention concerne une dispersion aqueuse de polymère à base de particules de polymère multi-structurées (au moins 3 phases distinctes de polymère) avec ladite particule comprenant :

- une phase polymère comme coeur, à base d'un polymère P1 issu de la polymérisation en émulsion d'une composition de monomères M1, avec P1 ayant une température de transition vitreuse Tg1 (calculée selon Fox) allant de 60 à 120°C, de préférence de 60 à 100°C,
- une seconde phase polymère enveloppant ledit coeur, à base d'un polymère P2 issu de la polymérisation en émulsion d'une composition de monomères M2, avec P2 ayant une température de transition vitreuse Tg2 (calculée selon Fox) allant de -60 à 40°C, de préférence de -30 à 30°C,
- une troisième phase polymère externe (ou écorce) enveloppant ladite phase P2, à base d'un polymère P3 issu de la polymérisation en émulsion d'une composition de monomères M3, avec P3 ayant une température de transition vitreuse Tg3 (calculée selon Fox) supérieure à Tg2, en particulier supérieure de plus de 5°C (à Tg2) et ne dépassant pas 120°C, de préférence de 60 à 120°C et plus préférentiellement de 60 à 115°C et une masse moléculaire moyenne en nombre Mn mesurée par Chromatographie d'exclusion stérique ou GPC dans le THF, avec étalonnage polystyrène, ne dépassant pas 150000, de préférence allant de 1000 à 150000,

avec les taux en poids par rapport au poids total de polymère P1 + P2 + P3 étant pour :

- P1 de 5 à 50%
- P2 de 40 à 85%, de préférence de 45 à 80%
- P3 de 5 à 25%, de préférence de 10 à 20%

et la somme desdits taux en poids (P1 + P2 + P3) étant égale à 100%
et en ce que ladite composition M3 dont est issu P3 et éventuellement ladite composition M2 dont

est issu P2 comprennent au moins un monomère éthyléniquement insaturé porteur en plus de son insaturation éthylénique d'au moins un groupement fonctionnel X sélectionné parmi : acétoacétoxy, diacétone, méthylol ou alkoxysilane, carboxy/anhydride, hydroxy, amine, époxy (ou oxirane), phosphate, phosphonate, phosphinate, sulfate, sulfonate, amide, imide, aziridine, oxazoline, imidazole, carbonate cyclique, benzophénone, uréido, sous condition que dans le cas de présence de plus d'un monomère porteur de groupement fonctionnel X, lesdits groupements X ne peuvent réagir entre eux lors de la préparation de ladite dispersion ou lors du stockage.

De préférence, les polymères des phases P1 et P2 ont des Mn bien supérieures à 150000, plus particulièrement proches ou supérieures à 1000000.

Plus particulièrement, P3 est moins hydrophobe que P2 et encore plus particulièrement P2 est plus hydrophobe que P1.

D'une manière générale, un monomère « hydrophobe » est un monomère ayant peu d'affinité avec l'eau ou qui est peu soluble dans l'eau. Une méthode d'estimation de cette hydrophobie est celle de mesure du coefficient de partage de la substance à évaluer, entre l'octanol et l'eau, avec l'hydrophobie exprimée en logarithme de ce coefficient de partage. La valeur d'hydrophobie logKow pour un monomère est une estimation calculée du logarithme du coefficient de partage (log P) entre l'octanol et l'eau, par la méthode de contribution des atomes et des fragments structuraux de la molécule, en utilisant pour cette estimation le logiciel KowWin de SRC (Syracure Research Corporation). Cette méthodologie est décrite par W. M. Meylan et P.H. Howard en 1995 dans « Atom/fragment contribution method for estimating octanol-water partition coefficients » dans Pharm. Sci. 84:83-92. Le coefficient de partage P correspond au rapport de la concentration chimique dans la phase octanol par rapport à la concentration chimique dans la phase aqueuse dans un système avec deux phases en équilibre. Concernant un copolymère, en particulier tel qu'un polymère défini selon l'invention, la valeur globale d'hydrophobie selon l'invention basée sur le logarithme du coefficient de partage octanol/eau est définie comme étant la valeur moyenne en poids sur l'ensemble des monomères composants dudit polymère et elle est en particulier estimée par la moyenne en poids sur l'ensemble de monomères composants, des valeurs logKow individuelles calculées par la méthode KowWin, comme décrite ci-haut et correspond donc, selon cette définition à :

valeur globale d'hydrophobie :

$$\text{valeur globale d'hydrophobie : } \Sigma_i[x_i * (logKow)_i]$$

avec,

$\Sigma_i$ : sommation sur i monomères composants

$x_i$ : fraction en poids du monomère i dans ledit copolymère,

$(logKow)_i$ : valeur d'hydrophobie calculée par la méthode KowWin pour ledit monomère i,

avec Kow correspondant au coefficient calculé de partage octanol/eau et logKow étant le logarithme de ce coefficient.

De préférence, l'écart de valeur moyenne calculée d'hydrophobie selon ce principe doit être d'au moins 0,2, en particulier d'au moins 0,5 unités entre P3 et P2, avec P2 ayant une valeur moyenne calculée logKow plus élevée (plus hydrophobe) que P3.

La dispersion de l'invention est en particulier obtenue par polymérisation en émulsion de ladite composition M1, réalisée en présence de trois tensioactifs anioniques, dont un tensioactif anionique dans une composition de monomères de semence M0 et deux tensioactifs différents dans la composition de monomères M'1 avec la composition globale issue de M0 et de M'1 correspondant à ladite composition M1 de monomères et ladite polymérisation en émulsion de ladite composition M2 est réalisée en présence d'au moins deux tensioactifs dont un tensioactif non ionique, de préférence choisi parmi les alcools gras alcoxylés et l'autre étant anionique et pouvant être identique ou différent par rapport à l'un des deux tensioactifs définis ci-haut pour M1, plus particulièrement identique ou différent de celui de la composition de semence M0.

Comme tensioactifs anioniques convenables pour être utilisés dans M0, M'1 et M2, on peut citer des tensioactifs porteurs d'un groupement sulfate, sulfonate, phosphate ou phosphonate ou phosphinate, en particulier parmi les suivants :

- sulfosuccinates d'alkyle en $C_8$-$C_{18}$, éventuellement alcoxylés (diesters d'acide sulfosuccinique avec alcools en $C_8$-$C_{18}$, éventuellement alcoxylés)
- sulfate, sulfonate, phosphate ou phosphonate ou phosphinate d'alkyle en $C_8$-$C_{18}$, de préférence $C_9$-$C_{14}$, éventuellement alcoxylés

- sulfate, sulfonate, phosphate ou phosphonate ou phosphinate d'alkyl aryle (aryle substitué alkyle) avec alkyl en $C_8$ à $C_{18}$, éventuellement alcoxylé.

Quand lesdits alkyles sont alcoxylés, l'unité alcoxy peut être l'éthoxy et/ou le propoxy, l'éthoxy étant l'unité alcoxy la plus préférée. Le nombre d'unités alcoxy peut aller de 2 à 30, de préférence de 2 à 10.

Plus particulièrement, ledit tensioactif anionique est sélectionné parmi le dodécylbenzènesulfonate, le lauryl sulfate de sodium, le lauryl sulfate de sodium éthoxylé, l'isotridécylsulfate de sodium éthoxylé, le lauryl phosphate d'ammonium éthoxylé ou les sulfosuccinates et plus préférentiellement parmi les sulfosuccinates.

De préférence, au moins un desdits tensioactifs anioniques dans M1 et M2 est un sulfosuccinate.

Selon une option particulièrement préférée de la dispersion de l'invention, ladite composition M2 et par conséquent ledit polymère P2 issu de M2 comprend au moins un agent de transfert hydrosoluble. Encore plus particulièrement, ladite composition M3 et par conséquent ledit polymère P3 issu de M3 comprend au moins deux agents de transfert dont un agent de transfert hydrosoluble, c'est-à-dire soluble dans l'eau et un agent de transfert liposoluble, c'est-à-dire soluble en phase organique en fait dans les monomères. Encore plus préférentiellement dans un tel cas, le rapport en poids d'agent de transfert hydrosoluble (pur) sur liposoluble (pur) pour l'ensemble de phases P2 et P3 (P2 + P3) est inférieur à 2 et de préférence il est inférieur à 0,5. De préférence, ces agents de transfert sont des mercaptans.

Comme agents de transfert hydrosolubles convenables, on peut citer des agents de transfert comprenant un groupement ionique ou ionisable avec un nombre faible d'atomes de carbone, par exemple d'au plus 4 atomes de carbone. Comme exemple de groupement ionique ou ionisable, on peut citer les groupements $-CO_2H$ ou $-SO_3H$.

Comme agents de transfert liposolubles convenables, on peut citer les agents de transfert comprenant un nombre plus élevé d'atomes de carbone, par exemple au moins 6 atomes de carbone.

Lesdits groupements X ne peuvent réagir entre eux lors de la préparation de ladite dispersion ou lors du stockage. En fait, cette limitation sur la fonctionnalité X, quand il y a plus d'un tel monomère fonctionnalisé X, s'impose pour éviter toute réticulation prématurée de la dispersion aqueuse avant son application ou usage final.

En fonction du groupement X, ledit monomère porteur de groupement X peut être choisi comme suit par groupement X :

- pour carboxy/anhydride : acide (méth)acrylique, acide/anhydride itaconique, acide fumarique, anhydride maléique, acide/anhydride tetrahydrophtalique (THP)
- pour hydroxy : hydoxyalkyl (méth)acrylates, avec alkyl en $C_2$ à $C_4$, éventuellement alcoxylés, en particulier hydroxyéthyl (méth)acrylate (HE(M)A), hydroxypropyl (méth)acrylate (HP(M)A), hydroxybutyl(méth)acrylate HB(M)A alcoxylés ou non alcoxylés
- pour époxy : (M)AGLY (méth)acrylate de glycidyle), (méth)acrylate porteur d'un groupement cycloaliphatique époxydé parmi dicyclopentenyl époxydé, cyclohéxenyl époxydé, tetrahydrophtalique époxydé, norbornényl époxydé
- pour aminé : aminoalkyl (méth)acrylates ou aminoalkyl (méth)acrylamides avec alkyl en $C_2$ à $C_4$, par exemple le MADAME (Méthacrylate de diméthyl amino éthyle) ou le MATBAE (méthacrylate de t-butyl aminoéthyle)
- pour amide : le (méth)acrylamide
- pour imide : le maléimide
- pour carbonate cyclique : (méth)acrylate de carbonate de glycérol
- pour phosphate : mono et/ou diesters phosphates d'hydroxy alkyl (méth)acrylates, éventuellement alcoxylés, l'alcoxylé étant de préférence éthoxylé et/ou propoxylé
- pour phosphonate : esters phosphonates d'hydroxyalkyl (méth)acrylates, éventuellement alcoxylés, l'alcoxylé étant de préférence éthoxylé et/ou propoxylé
- pour phosphinate : esters d'hydroxyalkyl (méth)acrylates avec l'acide phosphinique, l'alcoxylé étant de préférence éthoxylé et/ou propoxylé
- pour sulfate : esters d'hydroxy alkyl (méth)acrylates, éventuellement avec alkyl alcoxylé, l'alcoxylé étant de préférence éthoxylé et/ou propoxylé
- pour sulfonate : esters sulfonates d'hydroxyalkyl (méth)acrylates ou d'hydroxyalkyl (méth)acrylamides, éventuellement (alkyles) alcoxylés, l'alcoxylé étant de préférence éthoxylé et/ou propoxylé, sulfonates tels que le (méth)acrylate d'hydroxy éthyl sulfonate ou l'acrylamide propane sulfonate (y compris forme acide ou sels)
- pour imidazole : le méthacrylate de 2-éthyl(2-oxo-imidazolidin-1 yl)
- pour oxazoline : les (méth)acrylates d'hydroxy alkyl 2-oxazoline
- pour uréido : N-(2-méthacryloyloxyéthyl) éthylène urée
- pour benzophénone : le (méth)acrylate de benzophénone
- pour aziridine : le méthacrylate de 1-(2-hydroxyéthyl) aziridine
- pour acétoacétoxy : l'acétoacétoxyéthyl (méth)acrylate (AAEM)
- pour diacétone : la diacétone acrylamide (DAAM)
- pour méthylol : la N-méthylolacrylamide (NMA)

- pour alkoxysilane : les (méth)acrylates d'alkoxysilanes.

Selon une option plus particulièrement préférée, ledit groupement X est un groupement réactif et choisi parmi : acétoacétoxy, diacétone, N-méthylol, alcoxysilane, avec les monomères préférés porteurs dudit groupement X étant choisis parmi l'acétoacétoxyéthyl (méth)acrylate (AAEM), la diacétone diacrylamide (DAAM), N-méthylol acrylamide, les (méth)acrylates d'alcoxysilanes. Les alcoxysilanes sont en fait des silanes bloqués par les groupements alcoxy. L'intérêt de tels groupements X et des monomères associés porteurs d'un tel groupement est dans l'obtention de dispersions aqueuses autoréticulables au séchage, c'est-à-dire lors de la formation du film et l'élimination de l'eau et présentant donc un intérêt pour des revêtements aqueux autoréticulables.

Selon une autre option particulière, ledit groupement X est choisi parmi : carboxy/anhydride, hydroxy, amine, époxy (ou oxirane), imide, aziridine, oxazoline, imidazole, carbonate cyclique. L'intérêt de ces groupements et monomères les portant est l'obtention de compositions de dispersions et plus particulièrement de compositions de revêtements réticulables par l'addition dans la composition finale d'application d'un agent de réticulation porteur d'au moins deux groupements réactifs avec lesdits groupements X dudit polymère.

Quand un monomère porteur de groupement X est présent, l'indice de groupements X exprimé en mmoles/g (par g) de polymère (le polymère étant ici : P1 + P2 + P3) peut varier de 0,002 à 0,5, de préférence de 0,005 à 0,5 et plus préférentiellement de 0,01 à 0,5 et encore plus préférentiellement de 0,02 à 0,5.

Selon une possibilité préférée, lesdits polymères P1, P2 et P3 sont issus respectivement desdites compositions de monomères M1, M2 et M3, constituées exclusivement de monomères (méth)acryliques ou des mélanges de monomères (méth)acryliques avec au moins un monomère vinyl aromatique, le styrène étant le monomère vinyl aromatique préféré.

Selon une autre possibilité particulière, ledit polymère P1 est issu d'une composition de monomères M1 comprenant au moins un monomère en tant qu'agent réticulant interne. Cela signifie que ledit agent réticulant a au moins deux insaturations éthyleniques polymérisables lors de la polymérisation en émulsion de ladite composition M1 pour conduire à un polymère P1 réticulé. Comme exemple convenable d'agent réticulant, on peut citer des monomères multifonctionnels de fonctionnalité en groupements acryliques (y compris méthacryliques) et/ou allyliques ou vinyliques d'au moins 2. Comme exemples convenables d'agents réticulants acryliques, on peut citer l'éthylène glycol di(méth)acrylate, le propylène glycol di(méth)acrylate le butane diol di(méth)acrylate, l'hexane diol di(méth)acrylate, le triméthylol propane tri(méth)acrylate etc. « Acryliques » signifie ici à la fois acryliques et méthacryliques et le terme « acrylates » signifie à la fois acrylates et méthacrylates. Comme agent réticulant acrylique et allylique, on peut citer le méthacrylate d'allyle. Comme agent réticulant vinylique, on peut citer un monomère porteur d'au moins deux insaturations vinyliques, comme par exemple les di- et tri- vinyl benzènes.

Le deuxième objet de l'invention concerne un procédé de préparation d'une dispersion telle que définie ci-haut selon l'une de variantes de l'invention, lequel procédé comprend les étapes suivantes de polymérisation en émulsion :

i) une étape d'ensemencement comprenant une prépolymérisation en émulsion d'une composition de monomères de semence M0, avec les particules de semence ayant une taille inférieure ou égale à 40 nm et représentant un taux en poids allant de 2 à 25% et de préférence de 5 à 20% du poids de ladite phase polymère P1

ii) une étape de polymérisation en émulsion d'une composition de monomères M'1 donnant un polymère P'1, constituant ainsi avec le polymère de semence P0 obtenu à l'étape i), ladite phase polymère P1 dudit coeur de particule, ladite composition de monomères M'1 étant identique ou différente de ladite composition de semence M0 (si identique à M0, elle correspond à celle desdits monomères M1) et leur composition globale moyenne en poids (M0 + M'1) correspondant à celle desdits monomères M1, en option le produit de cette étape ii) (dispersion) pouvant être stocké et utilisé de manière différée dans le temps, comme matière première pour l'étape iii) suivante, c'est-à-dire pour l'addition et polymérisation de ladite composition de monomères M2,

iii) une étape de polymérisation en émulsion d'une composition de monomères M2 donnant lieu à ladite phase polymère P2, ladite étape iii) comprenant au départ un ensemencement et éventuellement en présence d'un agent de transfert hydrosoluble,

iv) une étape de polymérisation en émulsion d'une composition M3 de monomères donnant lieu à ladite phase polymère P3, éventuellement en présence de deux agents de transfert un hydrosoluble et l'autre liposoluble, de préférence choisis parmi les mercaptans, afin d'obtenir ledit polymère P3 en couche externe.

La composition globale moyenne en poids du mélange M0 + M'1 correspond à la composition desdits monomères M1 dont est issue ladite phase polymère P1.

En option, le produit de cette étape ii) (dispersion) peut être stocké et utilisé de manière différée dans le temps, comme matière première pour l'étape iii) suivante, c'est-à-dire pour l'addition et polymérisation de ladite composition de monomères M2.

Selon une première variante dudit procédé :

- l'étape d'ensemencement i) est réalisée en présence de 0,01 à 0,5%, de préférence de 0,05 à 0,2% en poids d'un tensioactif anionique (le produit tensioactif étant considéré à sec, c'est-à-dire à 100% de tensioactif) par rapport au poids total de P1 + P2 + P3
- l'étape de polymérisation en émulsion ii) de la composition de monomères M'1 est réalisée en présence de 0,1 à 3%, de préférence de 0,1 à 1,5% en poids par rapport au poids total de P1 + P2 + P3, d'un premier tensioactif anionique qui est identique ou différent de celui de la semence M0, c'est-à-dire celui utilisé à l'étape d'ensemencement i), mais s'il est identique cela signifie qu'il est rajouté à ladite étape ii) et d'un deuxième tensioactif anionique différent du premier de cette étape ii), avec le taux en poids de ces deux tensioactifs anioniques de phase P1 étant de 0,1 à 3%, de préférence de 0,1 à 1,5% par rapport au poids total de P1 + P2 + P3
- l'étape de polymérisation en émulsion iii) de la composition de monomères M2 est réalisée en présence de 0,1 à 3%, de préférence de 0,2 à 2,5% en poids par rapport au poids total de P1 + P2 + P3, d'au moins deux tensioactifs a) et b) avec a) étant un premier tensioactif non ionique choisi parmi les alcools gras alcoxylés, plus préférentiellement alcools gras en $C_{12}$ à $C_{16}$ alcoxylés, encore plus préférentiellement avec comme unités alcoxy des unités éthoxy et/ou propoxy, en particulier des unités éthoxy et plus particulièrement avec le nombre desdites unités alcoxy étant de 3 à 50 et encore plus particulièrement de 5 à 40 unités éthoxy et b) étant un tensioactif anionique pouvant être identique ou différent de ceux de l'étape ii) avec ladite étape iii) comprenant au départ un ensemencement et en option en présence d'au moins un agent de transfert hydrosoluble,
- l'étape de polymérisation iv) de ladite composition M3 est réalisée en présence ou absence de tensioactifs et si (réalisée) en présence de tensioactifs, dans ce cas dans les mêmes conditions que celles de l'étape iii) et en option en présence d'au moins deux agents de transfert dont un hydrosoluble et un liposoluble.

Plus particulièrement, concernant ledit procédé selon l'invention :

- les étapes i) et ii) sont réalisées à une température de 75 à 90°C
- l'étape de polymérisation iii) de ladite composition de monomères M2 comme l'étape de polymérisation iv) de ladite composition de monomères M3 est réalisée à une température inférieure à Tg1, lorsque ledit procédé est mis en oeuvre à pression atmosphérique.

Plus préférentiellement concernant ledit procédé, l'étape ii) de polymérisation en émulsion de la composition globale de monomères M1, donnant ledit polymère P1 et l'étape iii) de polymérisation en émulsion de ladite composition M2 donnant ledit polymère P2 sont poursuivies à un taux de conversion d'au moins 95%, préférentiellement d'au moins 98% et plus préférentiellement de 100% avant l'addition de ladite composition de monomères M3.

Le troisième objet de l'invention concerne une composition de dispersion aqueuse de polymère, laquelle composition comprend au moins une dispersion aqueuse telle que définie selon l'une des variantes définies ci-haut selon l'invention ou obtenue par le procédé tel que défini selon l'invention.

Selon un cas particulier et préféré dans ladite composition de dispersion, ladite dispersion est une dispersion telle que définie ci-haut comportant dans P3 et éventuellement dans P2, des monomères fonctionnalisés X où ledit groupement X est un acétoacétoxy ou diacétone, ladite composition comprenant en dispersion au moins un additif portant au moins deux groupements réactifs par réaction latente (lors du séchage filmification des particules de polymère) avec lesdits groupements X, de préférence ledit additif à réaction latente étant une dihydrazide, en particulier la dihydrazide d'acide adipique dans le cas où X est une diacétone et quand X est un acétoacétoxy, ledit additif étant de préférence une polyamine, en particulier diamine ou un ester acrylate multifonctionnel en groupements acrylates (MFA). L'intérêt d'une telle composition est l'obtention des compositions et plus particulièrement de compositions aqueuses de revêtements autoréticulables lors du séchage et de la filmification avec l'élimination de l'eau.

Selon une variante particulièrement préférée, ladite composition de dispersion aqueuse de polymère comprend en plus de ladite dispersion selon l'invention au moins une autre dispersion aqueuse de polymère, de préférence avec ladite autre dispersion étant une dispersion de résines ou de polymères choisie parmi : dispersion de polyesters saturés et/ou insaturés, de préférence à base de polyesters insaturés et plus préférentiellement dispersion de résines alkydes modifiées ou non modifiées, dispersion (émulsion) de copolymères acryliques, y compris purement acryliques et styrène-acryliques, dispersion de copolymères vinyliques, dispersion d'oligomères acryliques acrylés, dispersion de polyuréthanes y compris polyuréthanes insaturés, en particulier acrylés, dispersion de résines d'hydrocarbures ou dispersion de résines de colophane, y compris esters de colophane ou de résines modifiées à la colophane.

Parmi les dispersions d'alkydes sont inclues les dispersions d'alkydes modifiées, en particulier modifiées par monomères acryliques ou par des monomères vinyl aromatiques comme le styrène ou par des motifs uréthane ou par des motifs amides ou modifiées par la colophane et en particulier courte en huile. Plus particulièrement, ladite alkyde est biosourcée par rapport aux matières premières utilisées. Une telle résine biosourcée est en particulier décrite dans WO 2012/042153.

Ladite composition de dispersion peut être préparée par mélange desdites dispersions effectué à la température de préparation de la dispersion selon l'invention ou à une température inférieure.

Selon une autre option, ladite composition de dispersion de polymère comprend une dispersion selon l'invention comme définie ci-haut avec P3 et éventuellement P2 issus de compositions de monomères respectives, comprenant pour P3 et éventuellement comprenant pour P2, des monomères fonctionnalisés avec X parmi carboxy/anhydride, hydroxy, amine, époxy (ou oxirane), imide, aziridine, oxazoline, imidazole, carbonate cyclique et (ladite composition de dispersion) comprenant en plus au moins un agent réticulant portant au moins deux groupements réactifs avec lesdits groupements X. Une telle composition a un intérêt particulier pour les compositions réticulables et en particulier les compositions réticulables de revêtements.

Un autre objet de l'invention concerne une composition de revêtement, en particulier composition aqueuse de revêtement, laquelle composition comprend au moins une dispersion aqueuse telle que définie selon l'invention comme décrit ci-haut ou obtenue par un procédé tel que défini selon l'invention ou ladite composition de revêtement comprend au moins une composition de dispersion telle que définie selon l'invention ci-avant.

En particulier, ladite composition de revêtement selon l'invention est autoréticulable et comprend donc ladite dispersion ou ladite composition de dispersion telles que décrites ci-haut pour compositions de revêtements autoréticulables.

Selon une autre variante, ladite composition de revêtement, en plus de ladite dispersion, avec (ou ayant) le polymère P3 et éventuellement polymère P2 issus des compositions de monomères comprenant des monomères fonctionnalisés X parmi carboxy/anhydride, hydroxy, amine, époxy (ou oxirane), imide, aziridine, oxazoline, imidazole, carbonate cyclique, comprend au moins un agent réticulant porteur d'au moins deux groupements réactifs avec lesdits groupements X dudit polymère de ladite dispersion ou ladite composition de revêtement comprend au moins une composition de dispersion comprenant ladite dispersion.

Plus particulièrement, ladite composition de revêtement ne comprend pas d'agent coalescent. Ceci signifie qu'il n'y a pas besoin d'un tel agent pour la coalescence et la filmification.

Un autre objet couvert par la présente invention est l'utilisation d'une dispersion aqueuse selon l'invention ou obtenue par un procédé selon l'invention, en tant que liant organique pour revêtements aqueux, c'est-à-dire dans des compositions aqueuses de revêtement.

Plus particulièrement, cette utilisation peut concerner des revêtements aqueux réticulables, y compris autoréticulables.

Ladite utilisation concerne de préférence des revêtements industriels, en particulier des revêtements de protection et/ou revêtements décoratifs, plus particulièrement choisis parmi : peintures, vernis, lasures, primaires, encres, adhésifs et/ou revêtements de finition (topcoats), d'étanchéité, de traitement de verre, de traitement de fibres, en particulier de textile, de traitement de tissus tissés ou non tissés.

Selon une option particulière, ladite utilisation concerne des revêtements de protection choisis parmi les revêtements de protection mécanique et/ou chimique de substrats, en particulier parmi les substrats : métal, béton, fibrociment, plâtre, bois, carton, plastique, composite, verre, fibres (creuses ou non), textile, cuir et tissus tissés ou non tissés qui peuvent être des tissus synthétiques ou cellulosiques.

Finalement, l'invention couvre également en tant que produit fini, un revêtement, résultant de l'utilisation d'au moins une dispersion telle que décrite ci-haut selon l'invention ou obtenue par un procédé de l'invention tel que décrit ci-haut ou de l'utilisation d'une composition de dispersion telle que décrite selon l'invention ci-haut. Plus particulièrement, ledit revêtement est réticulé.

Les exemples exposés ci-après sont présentés à titre d'illustration de l'invention et de ses performances et en aucun cas ils ne limitent l'invention.

Partie expérimentale

A) Préparation des dispersions aqueuses de polymère et caractéristiques

1) Matières premières utilisées (voir tableau 1 ci-dessous)

Tableau 1 : Matières premières utilisées dans la synthèse des dispersions

| Composant Nom commercial ou nom chimique abrégé | Fonction technique | Nature chimique | Fournisseur |
|---|---|---|---|
| Aerosol® A102 | Tensio-actif anionique | Sulfosuccinate d'alcool gras éthoxylé, sel de sodium ($C_{10}$-$C_{12}$) solution à 30% dans l'eau | Cytec |

# EP 3 068 814 B1

(suite)

| Composant Nom commercial ou nom chimique abrégé | Fonction technique | Nature chimique | Fournisseur |
|---|---|---|---|
| Disponil® FES 32 | Tensio-actif anionique | Sulfate d'alcool gras polyglycol éther, sel de sodium solution à 31% dans l'eau | Cognis |
| Emulan® TO 4070 | Tensio-actif Non-ionique | Alcool gras éthoxylé secondaire avec 40 éthoxy, 70% | BASF |
| SR 351 | Agent réticulant | Triméthylol propane triacrylate | Sartomer |
| ABu | Monomère | Acrylate de butyle | Arkema |
| MAM | Monomère | Méthacrylate de méthyle | Arkema |
| Sty | Monomère | Styrène | Arkema |
| AA | Monomère | Acide acrylique | Arkema |
| AMA | Monomère | Acide méthacrylique | Arkema |
| DAA | Réticulant | Diacétone acrylamide | DSM |
| AADH | agent réticulant vs X | Acide adipique dihydrazide | DSM |
| nDDM | Agent de transfert liposoluble | N-dodécylmercaptan | Acros |
| MAA | Agent de transfert hydrosoluble | Acide mercaptoacétique | Acros |
| $Na_2S_2O_8$ | Peroxyde | Persulfate de sodium | Aldrich |
| TBHP | Peroxyde | Ter-butyle hydroperoxyde à 70% | Aldrich |
| SFS | Réducteur | Formaldéhyde sulfoxylate de sodium | Bruggeman |
| Ammoniaque | Agent de neutralisation | Hydroxyde d'ammonium | Prolabo |
| Acticide MBS | Biocide | Solution aqueuse de méthylisothiazoline (MIT) et de benzisothiazolinone (BIT) (2,5% MIT / 2,5% BIT) | Thor |

Les Tg des phases polymères P1, P2 et P3 sont calculées selon la loi de Fox, à partir des valeurs de Tg des homopolymères indiquées ci-dessous :

| Monomères | Abréviation | Tg (°C) |
|---|---|---|
| Acide acrylique | AA | 106 |
| Acide méthacrylique | AMA | 228 |
| Acrylate de butyle | ABu | -54 |
| Styrène | STY | 100 |
| Méthacrylate de méthyle | MAM | 105 |
| DiAcétone Acrylamide | DAA | 77 |

Dans le cas de l'essai décrit ci-dessous et qui est dans l'invention, les Tg calculées, les répartitions en poids et les Mn attendues des différentes phases sont indiquées dans le tableau 2 ci-dessous :

Tableau 2 : %, Tg et Mn des phases P1, P2 et P3

|  | P1 | P2 | P3 |
|---|---|---|---|
| Tg Fox en °C | 80,5 | -26,5 | 81,6 |
| % poids | 15 | 67 | 18 |
| Mn | $\geq 1.10^6$ | $\geq 1.10^6$ | $1.10^3\text{-}1,5.10^5$ |

## 2) Mode opératoire général de préparation des dispersions

Le mode opératoire décrit ci-dessous correspond à celui de la préparation de la dispersion de l'invention selon l'exemple décrit ci-dessous.

### 2.1) Matériel utilisé

Un réacteur de 10 l (contenance interne) en acier est utilisé, équipé d'une double enveloppe, muni d'une agitation efficace (vortex), d'un réfrigérant à triple flux, d'un contrôle et d'une régulation de la température matière. Le réacteur comporte le nombre de raccords d'introductions nécessaires à l'introduction séparée des différents composants, ainsi qu'une introduction dédiée à l'azote pour travailler sous atmosphère inerte. L'étanchéité est vérifiée avant chaque préparation. L'installation est équipée d'un système permettant de contrôler les débits d'introduction des composants. La polymérisation est de type semi-batch à pression atmosphérique.

### 2.2) Préparation de la charge initiale en pied de cuve

17,5 g de Disponil® FES 32 sont solubilisés dans 1912,8 g d'eau déminéralisée en pied de cuve. La température du pied de cuve est portée à 80°C.

### 2.3) Préparation de la semence M0

On mélange 82 g de MAM et 9,45 g d'ABu.

### 2.4) Préparation de la composition de monomères M'1

35 g d'Aerosol® A102, 58,33 g de Disponil® FES 32 sont dispersés dans 284,7 g d'eau déminéralisée sous bonne agitation.
Sont ensuite ajoutés tour à tour et sous bonne agitation :

- 373,70 g de MAM
- 43,05 g d'ABu
- 6,30 g de TMPTA
- 10,50 g d'AMA

La préémulsion M'1 ainsi formée est blanche et stable et elle sera maintenue sous légère agitation.
M'1 sera utilisée avec M0 pour la synthèse du coeur de la particule P1, composé de P0 issu de M0 et de P'1 issu de M'1 (P1 = P0 + P'1).

### 2.5) Préparation de la composition de monomères M2

35 g d'Aerosol® A102, 75 g d'Emulan® TO 4070 sont dispersés dans 590 g d'eau sous bonne agitation.
Sont ensuite ajoutés tour à tour et sous agitation :

- 492,45 g de Styrène
- 1735,30 g d'ABu

On obtient une préémulsion blanche et stable.
5% de cette préémulsion, soit 146,4 g, seront prélevés et utilisés pour réaliser un ensemencement avant la coulée du reste de la composition de monomères M2.

Puis sont ajoutés dans la préémulsion, toujours sous bonne agitation :

- 78,05 g d'AMA
- 39,20 g de DAA
- 5,52 g de MAA

Cette préémulsion, blanche et stable, servira avec l'ensemencement précité (146,4 g) à la formation de la première écorce P2 de la particule.

La composition de monomères M2 correspond donc à la composition globale des monomères ajoutés.

### 2.6) Préparation de la composition de monomères M3

Sont ajoutés tour à tour et sous agitation :

- 515,90 g de MAM
- 66,50 g d'ABu
- 26,60 g d'AMA
- 12,60 g d'AA
- 8,40 g de DAA
- 35gdenDDM
- 1,48 g de MAA

On obtient une solution transparente et stable.

Cette solution de monomères, M3, servira à la synthèse de la seconde écorce P3 de la particule.

### 2.7) Préparation de la solution de Persulfate de sodium

- 8,75 g de $Na_2S_2O_8$
- 175 g d'eau

### 2.8) Préparation de la solution de TBHP

- 10 g de TBHP
- 43,85 g d'eau

### 2.9) Préparation de la solution de SFS

- 7 g de SFS
- 80,50 g d'eau

### 2.10) Préparation de la dispersion par polymérisation en émulsion

### i) Ensemencement PO

Le pied de cuve avec la charge initiale étant stable à 80°C, sont introduits pour l'ensemencement P0 le mélange de 82 g de MAM et 9,45 g d'ABu. Une fois la température stabilisée, 100% de la solution de persulfate de sodium est ajoutée. Le maximum d'exothermie marque la fin de cette étape, la taille de la particule est d'environ 40 nm et la conversion est supérieure à 70%.

### ii) Synthèse du coeur P1

L'introduction de la préémulsion M'1 dure 60 minutes à une température de polymérisation de 80°C.

La température est ensuite maintenue pendant 60 minutes supplémentaires à 80°C (post-cuisson). Puis, le milieu réactionnel est refroidi à 65°C. La conversion est alors proche de 100%.

iii) Synthèse de l'écorce P2

A 65°C, l'ensemencement constitué de 146,4 g de la fraction de préémulsion (telle que décrite au point 2.5) ci-haut) est introduit dans le réacteur. On mélange pendant au moins 5 min.
Début des introductions séparées :

- 100% de la préémulsion après ensemencement précité
- 65,5% de la solution de TBHP
- 65,5% de la solution de SFS

Pendant les coulées qui durent 120 minutes, la température du milieu est maintenue à 65°C. Cette étape est suivie d'une post-cuisson d'une durée de 60 minutes à 65°C. La conversion est alors proche de 100%.

iv) Synthèse de l'écorce P3

A 65°C, début des introductions séparées en 45 min :

- 100% de la composition de monomères M3
- 24,5% de la solution de TBHP
- 24,5% de la solution de SFS

Cette étape est suivie d'une post-cuisson d'une durée de 30 minutes à 65°C. La conversion est alors proche de 100%.

v) Traitement des monomères résiduels

Les solutions de TBHP et SFS sont ajoutées à 60°C en 30 minutes. Ce traitement redox est suivi d'un maintien à 60°C pendant 30 minutes avant refroidissement à température ambiante.

- 10% de la solution de TBHP
- 10% de la solution de SFS

vi) Additions finales

Après refroidissement vers 30-35°C, la dispersion obtenue est d'abord neutralisée sous bonne agitation (vortex) par addition d'une solution d'ammoniaque à 28%, environ 6 g par kg de dispersion, ajoutés en 30 min environ. Le pH est compris entre 8 et 9. Puis, on post-additionne 2,75 g d'AADH sous bonne agitation (vortex). Après 60 min d'agitation, il est ajouté un système biocide. La dispersion est ensuite filtrée sur toile 100 μm et caractérisée.

3) Méthodes et tests de caractérisation utilisés

3.1) pH

Le pH des dispersions aqueuses est mesuré selon la norme ISO 976.

3.2) Extrait sec

L'extrait sec des dispersions aqueuses est mesuré selon la norme ISO 3251.

3.3) Viscosité

La viscosité des dispersions aqueuses est mesurée selon la norme ISO 2555.

3.4) Taille des particules

La taille des particules est mesurée par Spectroscopie de Corrélation de Photons (PCS), à l'aide d'un appareillage N4+ de Beckman Coulter. L'échantillon est dilué (3 à 5 gouttes d'émulsion dans 50 ml d'eau) dans une cuve en polystyrène à l'aide d'eau désionisée sur un filtre en acétate de cellulose de 0,22 $\mu$m. La taille des particules est mesurée à une température de 25°C, sous un angle de mesure de 90° et à une longueur d'onde du laser de 633 nm.

3.5) Température minimale de formation de film (TMF)

La TMF des dispersions aqueuses est mesurée selon la norme ISO 2115.

4) Caractérisation de la dispersion

Le pH est de 8.5.
L'extrait sec est de 51%.
La viscosité est de 1150 mPa.s.
La taille de particule finale est d'environ 125 nm.
La TMF mesurée est de 6°C.

**Revendications**

**1.** Dispersion aqueuse de polymère à base de particules de polymère multi-structurées (au moins 3 phases distinctes de polymère) **caractérisée en ce que** ladite particule comprend :

- une phase polymère comme coeur, à base d'un polymère P1 issu de la polymérisation en émulsion d'une composition de monomères M1, avec P1 ayant une température de transition vitreuse Tg1 calculée selon Fox, allant de 60 à 120°C, de préférence de 60 à 100°C,
- une seconde phase polymère enveloppant ledit coeur, à base d'un polymère P2 issu de la polymérisation en émulsion d'une composition de monomères M2, avec P2 ayant une température de transition vitreuse Tg2 calculée selon Fox allant de -60 à 40°C, de préférence de -30 à 30°C,
- une troisième phase polymère externe (ou écorce) enveloppant ladite phase P2, à base d'un polymère P3 issu de la polymérisation en émulsion d'une composition de monomères M3, avec P3 ayant une température de transition vitreuse Tg3 calculée selon Fox, supérieure à Tg2, en particulier supérieure de plus de 5°C et ne dépassant pas 120°C, de préférence de 60 à 120°C et plus préférentiellement de 60 à 115°C et une masse moléculaire moyenne en nombre Mn ne dépassant pas 150000, de préférence allant de 1000 à 150000,

avec les taux en poids par rapport au poids total de polymère P1 + P2 + P3 étant pour :

- P1 de 5 à 50%
- P2 de 40 à 85%, de préférence de 45 à 80%
- P3 de 5 à 25%, de préférence de 10 à 20%

la somme desdits taux en poids (P1 + P2 + P3) étant égale à 100%
et **en ce que** ladite composition M3 dont est issu P3 et éventuellement ladite composition M2 dont est issu P2 comprennent au moins un monomère éthyléniquement insaturé porteur en plus de son insaturation éthylénique d'au moins un groupement fonctionnel X sélectionné parmi : acétoacétoxy, diacétone, méthylol ou alkoxysilane, carboxy/anhydride, hydroxy, amine, époxy (ou oxirane), phosphate, phosphonate, phosphinate, sulfate, sulfonate, amide, imide, aziridine, oxazoline, imidazole, carbonate cyclique, benzophénone, uréido, sous condition que dans le cas de présence de plus d'un monomère porteur de groupement fonctionnel X, lesdits groupements X ne peuvent réagir entre eux lors de la préparation de ladite dispersion ou lors du stockage.

**2.** Dispersion selon la revendication 1, **caractérisée en ce que** ladite polymérisation en émulsion de ladite composition M1 est réalisée en présence de trois tensioactifs anioniques dont un tensioactif anionique dans une composition de monomères de semence M0 et deux tensioactifs différents dans une composition de monomères M'1 avec la composition globale issue de M0 et de M'1, correspondant à ladite composition M1 de monomères et **en ce que** ladite polymérisation en émulsion de ladite composition M2 est réalisée en présence d'au moins deux tensioactifs dont un non ionique, de préférence choisi parmi les alcools gras alcoxylés et l'autre étant anionique et pouvant être identique ou différent par rapport à l'un des deux tensioactifs définis ci-haut pour M1 et qu'au moins un desdits tensioactifs anioniques dans M1 et M2 est un sulfosuccinate.

3. Dispersion selon la revendication 1 ou 2, **caractérisée en ce que** ladite composition M2 et par conséquent ledit polymère P2 issu de M2 comprend au moins un agent de transfert hydrosoluble, **en ce que** ladite composition M3 et par conséquent ledit polymère P3 issu de M3 comprend au moins deux agents de transfert dont un hydrosoluble et un liposoluble et le rapport en poids d'agent de transfert hydrosoluble (pur) sur liposoluble (pur) pour l'ensemble de phases P2 et P3 (P2 + P3) est inférieur à 2 et de préférence inférieur à 0,5.

4. Dispersion selon l'une des revendications 1 à 3, **caractérisée en ce que** ledit monomère porteur de groupement X est choisi comme suit par groupement X :

   - pour carboxy/anhydride : acide (méth)acrylique, acide/anhydride itaconique, acide fumarique, anhydride maléique, acide/anhydride tetrahydrophtalique (THP)
   - pour hydroxy : hydoxyalkyl (méth)acrylates, avec alkyl en $C_2$ à $C_4$, éventuellement alcoxylés, en particulier hydroxyéthyl (méth)acrylate (HE(M)A), hydroxypropyl (méth)acrylate (HP(M)A), hydroxybutyl(méth)acrylate HB(M)A alcoxylés ou non alcoxylés
   - pour époxy : MAGLY (méth)acrylate de glycidyle, (méth)acrylate porteur d'un groupement cycloaliphatique époxydé parmi dicyclopentenyl époxydé, cyclohéxenyl époxydé, tetrahydrophtalique époxydé, norbornényl époxydé
   - pour aminé : aminoalkyl (méth)acrylates ou aminoalkyl (méth)acrylamides avec alkyl en $C_2$ à $C_4$, par exemple le MADAME (Méthacrylate de diméthyl amino éthyle) ou le MATBAE (méthacrylate de t-butyl aminoéthyle)
   - pour amide : le (méth)acrylamide
   - pour imide : le maléimide
   - pour carbonate cyclique : (méth)acrylate de carbonate de glycérol
   - pour phosphate : mono et/ou diesters phosphates d'hydroxy alkyl (méth)acrylates, éventuellement alcoxylés
   - pour phosphonate : esters phosphonates d'hydroxyalkyl (méth)acrylates, éventuellement alcoxylés
   - pour phosphinate : esters d'hydroxyalkyl (méth)acrylates avec l'acide phosphinique, éventuellement alcoxylés
   - pour sulfate : esters d'hydroxy alkyl (méth) acrylates, éventuellement avec alkyl alcoxylé
   - pour sulfonate : esters sulfonates d'hydroxyalkyl (méth)acrylates ou d'hydroxyalkyl (méth)acrylamides, éventuellement alcoxylés, sulfonates tels que le (méth)acrylate d'hydroxy éthyl sulfonate ou l'acrylamide propane sulfonate (sous forme acide ou sels)
   - pour imidazole : le méthacrylate de 2-éthyl(2-oxo-imidazolidin-1 yl)
   - pour uréido : N-(2-méthacryloyloxyéthyl)éthylène urée
   - pour oxazoline : les (méth)acrylates d'hydroxy alkyl 2-oxazoline
   - pour benzophénone : le (méth)acrylate de benzophénone
   - pour aziridine : le méthacrylate de 1-(2-hydroxyéthyl)aziridine
   - pour acétoacétoxy : l'acétoacétoxyéthyl(méth)acrylate (AAEM)
   - pour diacétone : la diacétone acrylamide (DAAM)
   - pour méthylol : la N-méthylolacrylamide (NMA)
   - pour alkoxysilane : les (méth)acrylates d'alkoxysilanes.

5. Dispersion selon l'une des revendications 1 à 4_, **caractérisée en ce que** ledit groupement X est un groupement réactif et choisi parmi : acétoacétoxy, diacétone, N-méthylol, alcoxysilane, avec les monomères préférés porteurs dudit groupement X étant choisis parmi l'acétoacétoxyéthyl (méth)acrylate (AAEM), la diacétone diacrylamide (DAAM), N-méthylol acrylamide, les (méth)acrylates d'alcoxysilanes.

6. Dispersion selon l'une des revendications 1 à 4, **caractérisée en ce que** ledit groupement X est choisi parmi : carboxy/anhydride, hydroxy, amine, époxy (ou oxirane), imide, aziridine, oxazoline, imidazole ou carbonate cyclique.

7. Dispersion selon l'une des revendications 1 à 6, **caractérisée en ce que** l'indice de groupements X exprimé en mmoles/g de polymère (polymère : P1 + P2 + P3) varie de 0,002 à 0,5, de préférence de 0,005 à 0,5, plus préférentiellement de 0,01 à 0,5 et encore plus préférentiellement de 0,02 à 0,5.

8. Dispersion selon l'une des revendications 1 à 7, **caractérisée en ce que** lesdits polymères P1, P2 et P3 sont issus respectivement desdites compositions de monomères M1, M2 et M3, constituées exclusivement de monomères (méth)acryliques ou des mélanges de monomères (méth)acryliques avec au moins un monomère vinyl aromatique, le styrène étant le monomère vinyl aromatique préféré et **en ce que** ledit polymère P1 est issu d'une composition de monomères M1, comprenant au moins un monomère en tant qu'agent réticulant interne.

9. Procédé de préparation d'une dispersion telle que définie selon l'une des revendications 1 à 8, **caractérisé en ce que** ledit procédé comprend les étapes suivantes de polymérisation en émulsion :

i) une étape d'ensemencement comprenant une prépolymérisation en émulsion d'une composition de monomères de semence M0, avec les particules de semence ayant une taille inférieure ou égale à 40 nm et représentant un taux en poids allant de 2 à 25% et de préférence de 5 à 20% du poids de ladite phase polymère P1,
ii) une étape de polymérisation en émulsion d'une composition de monomères M'1 donnant un polymère P'1, constituant ainsi avec le polymère de semence P0 obtenu à l'étape i) ladite phase polymère P1 dudit coeur de particule, ladite composition de monomères M'1 étant identique ou différente de ladite composition de semence M0 (si identique à M0, elle correspond à celle desdits monomères M1) et leur composition globale moyenne en poids (M0 + M'1) correspondant à celle desdits monomères M1, en option le produit de cette étape ii) (dispersion) pouvant être stocké et utilisé de manière différée dans le temps, comme matière première pour l'étape iii) suivante,
iii) une étape de polymérisation en émulsion d'une composition de monomères M2 donnant lieu à ladite phase polymère P2, avec ladite étape iii) comprenant au départ un ensemencement et éventuellement en présence d'un agent de transfert hydrosoluble,
iv) une étape de polymérisation en émulsion d'une composition M3 de monomères donnant lieu à ladite phase polymère P3, éventuellement en présence de deux agents de transfert un hydrosoluble et l'autre liposoluble, de préférence choisis parmi les mercaptans, afin d'obtenir ledit polymère P3 en couche externe.

10. Procédé selon la revendication 9, **caractérisé en ce que** :

- l'étape d'ensemencement i) est réalisée en présence de 0,01 à 0,5%, de préférence de 0,05 à 0,2% en poids d'un tensioactif anionique par rapport au poids total de P1 + P2 + P3
- l'étape de polymérisation en émulsion ii) de la composition de monomères M'1 est réalisée en présence de 0,1 à 3%, de préférence de 0,1 à 1,5% en poids par rapport au poids total de P1 + P2 + P3 d'un premier tensioactif anionique qui est identique ou différent de celui de la semence M0 et d'un deuxième tensioactif anionique différent du premier de cette étape ii), avec le taux en poids de ces deux tensioactifs anioniques de phase P1 étant de 0,1 à 3%, de préférence de 0,1 à 1,5% par rapport au poids total de P1 + P2 + P3
- l'étape de polymérisation en émulsion iii) de la composition de monomères M2 est réalisée en présence de 0,1 à 3%, de préférence de 0,2 à 2,5% en poids par rapport au poids total de P1 + P2 + P3 d'au moins deux tensioactifs a) et b) avec a) étant un premier tensioactif non ionique choisi parmi les alcools gras alcoxylés, plus préférentiellement alcools gras en $C_{12}$ à $C_{16}$ alcoxylés, encore plus préférentiellement avec comme unités alcoxy des unités éthoxy et/ou propoxy, en particulier des unités éthoxy et plus particulièrement avec le nombre desdites unités alcoxy étant de 3 à 50 et encore plus particulièrement de 5 à 40 unités éthoxy et b) étant un tensioactif anionique pouvant être identique ou différent de ceux de l'étape ii), avec ladite étape iii) comprenant au départ un ensemencement et en option (pour ladite étape iii)) en présence d'au moins un agent de transfert hydrosoluble
- l'étape de polymérisation iv) de ladite composition M3 est réalisée en présence ou absence de tensioactifs et si en présence de tensioactifs dans les mêmes conditions que celles de l'étape iii) et en option en présence d'au moins deux agents de transfert dont un hydrosoluble et un liposoluble et **en ce que** :
- les étapes i) et ii) sont réalisées à une température de 75 à 90°C
- l'étape de polymérisation iii) de ladite composition de monomères M2 comme l'étape de polymérisation iv) de ladite composition de monomères M3 est réalisée à une température inférieure à Tg1, lorsque ledit procédé est mis en oeuvre à pression atmosphérique.

11. Procédé selon la revendication 9 ou 10, **caractérisé en ce que** l'étape ii) de polymérisation en émulsion de la composition globale M1 donnant le polymère P1 et l'étape iii) de polymérisation en émulsion de ladite composition M2 donnant le polymère P2 sont poursuivies à un taux de conversion d'au moins 95%, préférentiellement d'au moins 98% et plus préférentiellement de 100% avant addition de ladite composition de monomères M3.

12. Composition de dispersion aqueuse de polymère, **caractérisée en ce qu'**elle comprend au moins une dispersion aqueuse telle que définie selon l'une des revendications 1 à 8 ou obtenue par le procédé tel que défini selon l'une des revendications 9 à 11.

13. Composition selon la revendication 12, **caractérisée en ce que** ladite dispersion est une dispersion telle que définie selon la revendication 6 et que dans le cas où ledit groupement X est un acétoacétoxy ou diacétone, ladite composition comprend en dispersion au moins un additif portant au moins deux groupements réactifs par réaction latente (lors du séchage filmification des particules de polymère) avec lesdits groupements X, de préférence ledit additif à réaction latente étant une dihydrazide quand X est une

diacétone, en particulier la dihydrazide d'acide adipique et dans le cas où X est un acétoacétoxy, ledit additif étant de préférence une polyamine, en particulier diamine ou un ester acrylate multifonctionnel en groupements acrylates (MFA).

14. Composition selon la revendication 12 à 13, **caractérisée en ce qu'**elle comprend en plus de ladite dispersion au moins une autre dispersion aqueuse de polymère, de préférence avec ladite autre dispersion étant une dispersion de résines ou de polymères choisie parmi : dispersions de polyesters saturés et/ou insaturés, de préférence à base de polyesters insaturés et plus préférentiellement dispersion de résines alkydes modifiées ou non modifiées, dispersion (émulsion) de copolymères acryliques, y compris purement acryliques et styrène-acryliques, dispersion de copolymères vinyliques, dispersion d'oligomères acryliques acrylés, dispersion de polyuréthanes y compris polyuréthanes insaturés, en particulier acrylés, dispersion de résines d'hydrocarbures ou dispersion de résines de colophane ou de résines modifiées à la colophane.

15. Composition selon l'une des revendications 12 à 14, **caractérisée en ce qu'**elle comprend une dispersion telle que définie selon la revendication 6 et qu'en plus elle comprend au moins un agent réticulant portant au moins deux groupements réactifs avec lesdits groupements X.

16. Composition de revêtement, **caractérisée en ce qu'**elle comprend au moins une dispersion aqueuse telle que définie selon une des revendications 1 à 8 ou obtenue par un procédé tel que défini selon l'une des revendications 9 à 11 ou une composition de dispersion telle que définie selon l'une des revendications 12 à 15.

17. Composition selon la revendication 16, **caractérisée en ce qu'**elle ne comprend pas d'agent de coalescence.

18. Utilisation d'une dispersion telle que définie selon l'une des revendications 1 à 8 ou obtenue par un procédé tel que défini selon l'une des revendications 9 à 11, en tant que liant organique pour revêtements aqueux réticulables, y compris autoréticulables.

19. Utilisation selon la revendication 18, **caractérisée en ce qu'**il s'agit de revêtements industriels, en particulier de revêtements de protection et/ou revêtements décoratifs, de préférence choisis parmi : peintures, vernis, lasures, primaires, encres, adhésifs et/ou revêtements de finition (topcoats), d'étanchéité, de traitement de verre, de traitement de fibres, en particulier de textile, de traitement de tissus tissés ou non tissés.

20. Revêtement **caractérisé en ce qu'**il résulte de l'utilisation d'au moins une dispersion telle que définie selon l'une des revendications 1 à 8 ou obtenue par un procédé tel que défini selon l'une des revendications 9 à 11 ou de l'utilisation d'une composition de dispersion telle que définie selon l'une des revendications 12 à 15.

**Patentansprüche**

1. Wässrige Polymerdispersion aus multistrukturierten Polymerpartikeln (mindestens 3 verschiedene Polymerphasen), **dadurch gekennzeichnet, dass** der Partikel umfasst:

- eine Polymerphase als Kern aus einem Polymer P1, das aus der Emulsionspolymerisation einer Monomerzusammensetzung M1 abgeleitet ist, wobei P1 eine Glasübergangstemperatur Tg1, berechnet nach Fox, von 60 bis 120 °C, vorzugsweise von 60 bis 100 °C aufweist,
- eine zweite Polymerphase, die den Kern umschließt, aus einem Polymer P2, das aus der Emulsionspolymerisation einer Monomerzusammensetzung M2 abgeleitet ist, wobei P2 eine Glasübergangstemperatur Tg2, berechnet nach Fox, von -60 bis 40 °C, vorzugsweise von -30 bis 30 °C aufweist,
- eine dritte äußere Polymerphase (oder Schale), die die Phase P2 umschließt, aus einem Polymer P3, das aus der Emulsionspolymerisation einer Monomerzusammensetzung M3 abgeleitet ist, wobei P3 eine Glasübergangstemperatur Tg3, berechnet nach Fox aufweist, die höher ist als Tg2 und insbesondere mehr als 5 °C höher ist und nicht mehr als 120 °C beträgt, die vorzugsweise 60 bis 120 °C und bevorzugter 60 bis 115 °C beträgt, und eine zahlenmittlere Molmasse Mn von nicht mehr als 150.000, die vorzugsweise zwischen 1.000 und 150.000 liegt,

wobei die Gewichtsanteile bezogen auf das Gesamtgewicht von Polymer P1 + P2 + P3, für:

- P1 5 bis 50 %
- P2 40 bis 85 %, vorzugsweise 45 bis 80 %
- P3 5 bis 25 %, vorzugsweise 10 bis 20 % betragen,

wobei die Summe der Gewichtsanteile (P1 + P2 + P3) gleich 100 % ist,
und dadurch, dass die Zusammensetzung M3, aus der P3 abgeleitet ist, und gegebenenfalls die Zusammensetzung M2, aus der P2 abgeleitet ist, mindestens ein ethylenisch ungesättigtes Monomer umfassen, das neben seiner ethylenischen Ungesättigtheit mindestens eine funktionelle Gruppe X trägt, ausgewählt aus: Acetoacetoxy, Diaceton, Methylol oder Alkoxysilan, Carboxy/Anhydrid, Hydroxy, Amin, Epoxy (oder Oxiran), Phosphat, Phosphonat, Phosphinat, Sulfat, Sulfonat, Amid, Imid, Aziridin, Oxazolin, Imidazol, cyclischem Carbonat, Benzophenon, Ureido, vorausgesetzt, dass im Fall der Gegenwart von mehr als einem Monomer, das eine funktionelle Gruppe X trägt, die Gruppen X während der Herstellung der Dispersion oder während der Lagerung nicht miteinander reagieren können.

2. Dispersion nach Anspruch 1, **dadurch gekennzeichnet, dass** die Emulsionspolymerisation der Zusammensetzung M1 in Gegenwart von drei anionischen Tensiden, darunter einem anionischen Tensid in einer Impfmonomerzusammensetzung M0 und zwei verschiedenen Tensiden in einer Monomerzusammensetzung M'1, durchgeführt wird, wobei die Gesamtzusammensetzung, die aus M0 und aus M'1 abgeleitet ist, der Monomerzusammensetzung M1 entspricht, und dadurch, dass die Emulsionspolymerisation der Zusammensetzung M2 in Gegenwart von mindestens zwei Tensiden durchgeführt wird, von denen eines nicht ionisch ist, vorzugsweise ausgewählt aus alkoxylierten Fettalkoholen, und wobei das andere anionisch ist und in Bezug auf das eine der zwei oben für M1 definierten Tenside gleich oder verschieden sein kann, und dass mindestens eines der anionischen Tenside in M1 und M2 ein Sulfosuccinat ist.

3. Dispersion nach Anspruch 1 oder 2, **dadurch gekennzeichnet, dass** die Zusammensetzung M2 und folglich das Polymer P2, das aus M2 abgeleitet ist, mindestens ein wasserlösliches Übertragungsmittel umfasst, dadurch, dass die Zusammensetzung M3 und folglich das Polymer P3, das aus M3 abgeleitet ist, mindestens zwei Übertragungsmittel umfasst, von denen eines wasserlöslich und eines fettlöslich ist, und das Gewichtsverhältnis von (reinem) wasserlöslichem Übertragungsmittel zu (reinem) fettlöslichem Übertragungsmittel für alle Phasen P2 und P3 (P2 + P3) kleiner als 2 und vorzugsweise kleiner als 0,5 ist.

4. Dispersion nach einem der Ansprüche 1 bis 3, **dadurch gekennzeichnet, dass** das Monomer, das Gruppe X trägt, pro Gruppe X wie folgt ausgewählt ist:

- für Carboxy/Anhydrid: (Meth)acrylsäure, Itaconsäure/-anhydrid, Fumarsäure, Maleinsäureanhydrid, Tetrahydrophthal(THP)säure/-anhydrid,
- für Hydroxy: gegebenenfalls alkoxylierte Hydroxyalkyl(meth)acrylate, mit $C_2$- bis $C_4$-Alkyl, insbesondere Hydroxyethyl(meth)acrylat (HE(M)A), Hydroxypropyl(meth)acrylat (HP(M)A), Hydroxybutyl(meth)acrylat HB(M)A, die alkoxyliert oder nicht alkoxyliert sind,
- für Epoxy: MAGLY Glycidyl(meth)acrylat, (Meth)acrylat, das eine epoxidierte cycloaliphatische Gruppe aus epoxidiertem Dicyclopentenyl, epoxidiertem Cyclohexenyl, epoxidiertem Tetrahydrophthalsäureanhydrid, epoxidiertem Norbornenyl trägt,
- für Amin: Aminoalkyl(meth)acrylate oder Aminoalkyl(meth)acrylamide mit $C_2$- bis $C_4$-Alkyl, zum Beispiel DMAEMA (Dimethylaminoethylmethacrylat) oder TBAEMA (t-Butylaminoethylmethacrylat)
- für Amid: (Meth)acrylamid
- für Imid: Maleimid
- für cyclisches Carbonat: Glycerin(meth)acrylatcarbonat
- für Phosphat: gegebenenfalls alkoxylierte Mono- und/oder Diesterphosphate von Hydroxyalkyl(meth)acrylaten,
- für Phosphonat: gegebenenfalls alkoxylierte Phosphonatester von Hydroxyalkyl(meth)acrylaten,
- für Phosphinat: gegebenenfalls alkoxylierte Ester von Hydroxyalkyl(meth)acrylaten mit Phosphinsäure,
- für Sulfat: Ester von Hydroxyalkyl(meth)acrylaten, gegebenenfalls mit alkoxyliertem Alkyl
- für Sulfonat: gegebenenfalls alkoxylierte Sulfonatester von Hydroxyalkyl(meth)acrylaten oder von Hydroxyalkyl(meth)acrylamiden, Sulfonaten, wie beispielsweise Hydroxyethyl(meth)acrylatsulfonat oder Acrylamidpropansulfonat (in Säure- oder Salzform),
- für Imidazol: 2-Ethyl-(2-oxoimidazolidin-1-yl)methacrylat,
- für Ureido: N-(2-Methacryloyloxyethyl)ethylenharnstoff,
- für Oxazolin: Hydroxyalkyl-2-oxazolin(meth)acrylate,

- für Benzophenon: Benzophenon(meth)acrylat,
- für Aziridin: 1-(2-Hydroxyethyl)aziridinmethacrylat,
- für Acetacetoxy: Acetacetoxyethyl(meth)acrylat (AAEM),
- für Diaceton: Diacetonacrylamid (DAAM),
- für Methylol: N-Methylolacrylamid (NMA)
- für Alkoxysilan: Alkoxysilan(meth)acrylate.

5. Dispersion nach einem der Ansprüche 1 bis 4, **dadurch gekennzeichnet, dass** Gruppe X eine reaktive Gruppe ist und ausgewählt ist aus: Acetacetoxy, Diaceton, N-Methylol und Alkoxysilan, wobei die bevorzugten Monomere, die die Gruppe X tragen, ausgewählt sind aus Acetacetoxyethyl(meth)acrylat (AAEM), Diacetondiacrylamid (DAAM), N-Methylolacrylamid und Alkoxysilan(meth)acrylaten.

6. Dispersion nach einem der Ansprüche 1 bis 4, **dadurch gekennzeichnet, dass** Gruppe X ausgewählt ist aus: Carboxy/Anhydrid, Hydroxy, Amin, Epoxy (oder Oxiran), Imid, Aziridin, Oxazolin, Imidazol oder cyclischem Carbonat.

7. Dispersion nach einem der Ansprüche 1 bis 6, **dadurch gekennzeichnet, dass** der Index der Gruppen X, ausgedrückt in mmol/g Polymer (Polymer: P1 + P2 + P3) im Bereich zwischen 0,002 und 0,5, vorzugsweise zwischen 0,005 und 0,5, bevorzugter zwischen 0,01 und 0,5 und noch bevorzugter zwischen 0,02 und 0,5 liegt.

8. Dispersion nach einem der Ansprüche 1 bis 7, **dadurch gekennzeichnet, dass** die Polymere P1, P2 und P3 jeweils aus den Monomerzusammensetzungen M1, M2 und M3 abgeleitet sind, die ausschließlich aus (Meth)acrylmonomeren oder Mischungen von (Meth)acrylmonomeren mit mindestens einem vinylaromatischen Monomer bestehen, wobei Styrol das bevorzugte vinylaromatische Monomer ist, und dadurch dass das Polymer P1 aus einer Monomerzusammensetzung M1 abgeleitet ist, die mindestens ein Monomer als internes Vernetzungsmittel umfasst.

9. Verfahren zur Herstellung einer Dispersion nach einem der Ansprüche 1 bis 8, **dadurch gekennzeichnet, dass** das Verfahren die folgenden Schritte zur Emulsionspolymerisation umfasst:

   i) einen Impfschritt, umfassend eine Prä-Emulsionspolymerisation einer Impfmonomerzusammensetzung M0, wobei die Impfpartikel eine Größe von kleiner oder gleich 40 nm aufweisen und einen Gewichtsanteil zwischen 2 und 25 Gew.-% und vorzugsweise zwischen 5 und 20 Gew.-% der Polymerphase P1 darstellen,
   ii) einen Schritt zur Emulsionspolymerisation einer Monomerzusammensetzung M'1, die ein Polymer P'1 ergibt, das somit mit dem Impfpolymer P0, das in Schritt i) erhalten wurde, die Polymerphase P1 des Partikelkerns bildet, wobei die Monomerzusammensetzung M'1 gleich oder verschieden ist von der Impfzusammensetzung M0 (wenn sie gleich M0 ist, entspricht sie der der Monomere M1) und ihre gewichtsmittlere Gesamtzusammensetzung (MO + M'1) entspricht der der Monomere M1, gegebenenfalls kann das Produkt dieses Schritts ii) (Dispersion) gelagert werden und zu einem späteren Zeitpunkt als Ausgangsmaterial für den folgenden Schritt iii) verwendet werden,
   iii) einen Schritt zur Emulsionspolymerisation einer Monomerzusammensetzung M2, die zur Polymerphase P2 führt, wobei der Schritt iii) zu Beginn eine Beimpfung und gegebenenfalls in Gegenwart eines wasserlöslichen Übertragungsmittels,
   iv) einen Schritt zur Emulsionspolymerisation einer Monomerzusammensetzung M3 umfasst, der zu der Polymerphase P3 führt, gegebenenfalls in Gegenwart von zwei Übertragungsmitteln, wobei das eine wasserlöslich und das andere fettlöslich ist, vorzugsweise ausgewählt aus Mercaptanen, um das Polymer P3 als äußere Schicht zu erhalten.

10. Verfahren nach Anspruch 9, **dadurch gekennzeichnet, dass**:

   - der Impfschritt i) in Gegenwart von 0,01 bis 0,5 Gew.-%, vorzugsweise 0,05 bis 0,2 Gew.-% eines anionischen Tensids, bezogen auf das Gesamtgewicht von P1 + P2 + P3, durchgeführt wird,
   - der Schritt zur Emulsionspolymerisation ii) der Monomerzusammensetzung M'1 in Gegenwart von 0,1 bis 3 Gew.-%, vorzugsweise von 0,1 bis 1,5 Gew.-%, bezogen auf das Gesamtgewicht von P1 + P2 + P3, eines ersten anionischen Tensids, das gleich oder verschieden ist von dem der Impfzusammensetzung M0, und einem zweiten anionischen Tensid, das von dem ersten dieses Schritts ii) verschieden ist, durchgeführt wird, wobei der Gewichtsanteil dieser beiden anionischen Tenside der Phase P1 0,1 bis 3 %, vorzugsweise 0,1 bis 1,5 %, bezogen auf das Gesamtgewicht von P1 + P2 + P3, beträgt,
   - der Schritt zur Emulsionspolymerisation iii) der Monomerzusammensetzung M2 in Gegenwart von 0,1 bis 3 Gew.-%, vorzugsweise von 0,2 bis 2,5 Gew.-%, bezogen auf das Gesamtgewicht von P1 + P2 + P3, von mindestens zwei Tensiden a) und b) durchgeführt wird, wobei a) ein erstes nichtionisches Tensid ausgewählt ist aus alkoxylierten Fettalkoholen, vorzugsweise alkoxylierten $C_{12}$- bis $C_{16}$-Fettalkoholen, noch bevorzugter mit Ethoxy- und/oder Propoxyeinheiten, insbesondere Ethoxyeinheiten, als Alkoxyeinheiten, und wobei die Anzahl der Alkoxyeinheiten insbesondere 3 bis 50 und noch bevorzugter 5 bis 40 Ethoxyeinheiten beträgt, und b) ein anionisches Tensid ist, das gleich oder verschieden von denen aus Schritt ii) sein kann, wobei der Schritt iii) zu Beginn und (für den Schritt iii)) gegebenenfalls in Gegenwart mindestens eines wasserlöslichen Übertragungsmittels eine Beimpfung umfasst,
- wobei der Schritt zur Polymerisation iv) der Zusammensetzung M3 in Gegenwart oder Abwesenheit von Tensiden, und wenn in Gegenwart von Tensiden unter den gleichen Bedingungen wie denen aus Schritt iii), durchgeführt wird, und gegebenenfalls in Gegenwart von mindestens zwei Übertragungsmitteln, von denen eines wasserlöslich und eines fettlöslich ist, und dadurch, dass:
- die Schritte i) und ii) bei einer Temperatur von 75 bis 90 °C durchgeführt werden,
- der Schritt zur Polymerisation iii) der Monomerzusammensetzung M2 wie der Schritt zur Polymerisation iv) der Monomerzusammensetzung M3 bei einer Temperatur kleiner der Tg1 durchgeführt wird, wenn das Verfahren bei Atmosphärendruck eingesetzt wird.

11. Verfahren nach Anspruch 9 oder 10, **dadurch gekennzeichnet, dass** Schritt ii) zur Emulsionspolymerisation der Gesamtzusammensetzung M1, die das Polymer P1 ergibt, und der Schritt iii) zur Emulsionspolymerisation der Zusammensetzung M2, die das Polymer P2 ergibt, bei einer Umwandlungsrate von mindestens 95 %, vorzugsweise mindestens 98 % und bevorzugter 100 % fortgesetzt werden, bevor die Monomerzusammensetzung M3 zugegeben wird.

12. Wässrige Polymerdispersionszusammensetzung, **dadurch gekennzeichnet, dass** sie mindestens eine wässrige Dispersion nach einem der Ansprüche 1 bis 8 umfasst oder durch das Verfahren nach einem der Ansprüche 9 bis 11 erhalten wird.

13. Zusammensetzung nach Anspruch 12, **dadurch gekennzeichnet, dass** die Dispersion eine Dispersion nach Anspruch 6 ist, und dass in dem Fall, in dem die Gruppe X ein Acetoacetoxy oder Diaceton ist, die Zusammensetzung als Dispersion mindestens ein Additiv umfasst, das durch latente Reaktion (während der Trocknung/Filmbildung der Polymerpartikel) mit den Gruppen X mindestens zwei reaktive Gruppen trägt, wobei das Additiv mit latenter Reaktion, wenn X ein Diaceton ist, vorzugsweise ein Dihydrazid, insbesondere Adipinsäuredihydrazid ist, und in dem Fall, in dem X ein Acetoacetoxy ist, das Additiv vorzugsweise ein Polyamin, insbesondere ein Diamin oder ein multifunktioneller Acrylatester in Acrylatgruppen (MFA) ist.

14. Zusammensetzung nach Anspruch 12 bis 13, **dadurch gekennzeichnet, dass** sie zusätzlich zu der Dispersion mindestens eine andere wässrige Polymerdispersion umfasst, wobei die andere Dispersion vorzugsweise eine Harz- oder Polymerdispersion ist, ausgewählt aus: Dispersionen gesättigter und/oder ungesättigter Polyester, vorzugsweise aus ungesättigten Polyestern, und bevorzugter Dispersion von modifizierten oder unmodifizierten Alkydharzen, Dispersion (Emulsion) von Acrylcopolymeren, einschließlich reinen Acryl- und Styrol-Acryl-Copolymeren, Dispersion von Vinylcopolymeren, Dispersion von acrylierten Acryloligomeren, Dispersion von Polyurethanen, einschließlich insbesondere ungesättigter acrylierter Polyurethane, Dispersion von Kohlenwasserstoffharzen oder Dispersion von Kolophoniumharzen oder mit Kolophonium modifizierten Harzen.

15. Zusammensetzung nach einem der Ansprüche 12 bis 14, **dadurch gekennzeichnet, dass** sie eine Dispersion nach Anspruch 6 umfasst, und dass sie ferner mindestens ein Vernetzungsmittel umfasst, das mindestens zwei Gruppen trägt, die mit den Gruppen X reagieren können.

16. Beschichtungszusammensetzung, **dadurch gekennzeichnet, dass** sie mindestens eine wässrige Dispersion nach einem der Ansprüche 1 bis 8 oder erhalten durch ein Verfahren nach einem der Ansprüche 9 bis 11 oder eine Dispersionszusammensetzung nach einem der Ansprüche 12 bis 15 umfasst.

17. Zusammensetzung nach Anspruch 16, **dadurch gekennzeichnet, dass** sie kein Koaleszenzmittel umfasst.

18. Verwendung einer Dispersion nach einem der Ansprüche 1 bis 8 oder erhalten durch ein Verfahren nach einem der Ansprüche 9 bis 11 als organisches Bindemittel für vernetzende, einschließlich selbstvernetzende wässrige Beschichtungen.

19. Verwendung nach Anspruch 18, **dadurch gekennzeichnet, dass** es sich um industrielle Beschichtungen handelt, insbesondere um Schutzbeschichtungen und/oder dekorative Beschichtungen, vorzugsweise ausgewählt aus: Farben, Lacken, Lasuren, Grundanstrichen, Tinten, Klebstoffen und/oder Deckanstrichen (Topcoats), Dichtanstrichen, zur Glasbehandlung, zur Faser- insbesondere Textilfaserbehandlung, zur Behandlung von Geweben oder Vliesstoffen.

20. Beschichtung, **dadurch gekennzeichnet, dass** sie aus der Verwendung mindestens einer wässrige Dispersion nach einem der Ansprüche 1 bis 8 oder erhalten durch ein Verfahren nach einem der Ansprüche 9 bis 11 oder durch Verwendung einer Dispersionszusammensetzung nach einem der Ansprüche 12 bis 15 resultiert.

**Claims**

1. Aqueous dispersion of polymer based on multi-structured polymer particles (at least 3 different polymer phases), **characterized in that** said particle comprises:

   - a polymer phase as core, based on a polymer P1 derived from the emulsion polymerization of a monomer composition M1, with P1 having a glass transition temperature $Tg1$, calculated according to Fox, ranging from 60 to 120°C and preferably from 60 to 100°C,
   - a second polymer phase enveloping said core, based on a polymer P2 derived from the emulsion polymerization of a monomer composition M2, with P2 having a glass transition temperature $Tg2$, calculated according to Fox, ranging from -60 to 40°C and preferably from -30 to 30°C,
   - a third outer polymer phase (or shell) enveloping said phase P2, based on a polymer P3 derived from the emulsion polymerization of a monomer composition M3, with P3 having a glass transition temperature $Tg3$, calculated according to Fox, higher than $Tg2$, in particular more than 5°C higher and not exceeding 120°C, preferably from 60 to 120°C and more preferentially from 60 to 115°C, and a number-average molecular mass $Mn$ not exceeding 150 000, preferably ranging from 1000 to 150 000,

   with the weight contents relative to the total weight of polymer P1 + P2 + P3 being for:

   - P1 from 5% to 50%
   - P2 from 40% to 85%, preferably from 45% to 80%
   - P3 from 5% to 25%, preferably from 10% to 20% the sum of said weight contents (P1 + P2 + P3) being equal to 100%

   and **in that** said composition M3 from which P3 is derived and optionally said composition M2 from which P2 is derived comprise at least one ethylenically unsaturated monomer bearing, in addition to its ethylenic unsaturation, at least one functional group X selected from: acetoacetoxy, diacetone, methylol or alkoxysilane, carboxy/anhydride, hydroxy, amine, epoxy (or oxirane), phosphate, phosphonate, phosphinate, sulfate, sulfonate, amide, imide, aziridine, oxazoline, imidazole, cyclic carbonate, benzophenone, ureido, provided that, in the case of the presence of more than one monomer bearing a functional group X, said groups X cannot react together during the preparation of said dispersion or during storage.

2. Dispersion according to Claim 1, **characterized in that** said emulsion polymerization of said composition M1 is performed in the presence of three anionic surfactants, of which one anionic surfactant in a seed monomer composition M0 and two different surfactants in a monomer composition M'1 with the overall composition derived from M0 and M'1 corresponding to said monomer composition M1 and **in that** said emulsion polymerization of said composition M2 is performed in the presence of at least two surfactants, one of which is nonionic, preferably chosen from alkoxylated fatty alcohols, and the other being anionic and possibly being identical or different relative to one of the two surfactants defined above for M1 and that at least one of said anionic surfactants in M1 and M2 is a sulfosuccinate.

3. Dispersion according to Claim 1 or 2, **characterized in that** said composition M2 and consequently said polymer P2 derived from M2 comprises at least one water-soluble transfer agent, **in that** said composition M3 and consequently said polymer P3 derived from M3 comprises at least two transfer agents, of which one is water-soluble and one is liposoluble and the weight ratio of (pure) water-soluble transfer agent to (pure) liposoluble transfer agent for all the phases P2 and P3 (P2 + P3) is less than 2 and preferably less than 0.5.

4. Dispersion according to one of Claims 1 to 3, **characterized in that** said monomer bearing a group X is chosen as follows per group X:

- for carboxy/anhydride: (meth)acrylic acid, itaconic acid/anhydride, fumaric acid, maleic anhydride, tetrahydrophthalic (THP) acid/anhydride
- for hydroxy: hydroxyalkyl (meth)acrylates, with $C_2$ to $C_4$ alkyl, which are optionally alkoxylated, in particular alkoxylated or non-alkoxylated hydroxyethyl (meth)acrylate (HE(M)A), hydroxypropyl (meth)acrylate (HP(M)A), hydroxybutyl (meth)acrylate HB(M)A
- for epoxy: GLYMA glycidyl (meth)acrylate, (meth)acrylate bearing an epoxidized cycloaliphatic group from among epoxidized dicyclopentenyl, epoxidized cyclohexenyl, epoxidized tetrahydrophthalic and epoxidized norbornenyl
- for amine: aminoalkyl (meth)acrylates or aminoalkyl (meth)acrylamides with $C_2$ to $C_4$ alkyl, for example DMAE-MA (dimethyl aminoethyl methacrylate) or TBAEMA (t-butylaminoethyl methacrylate)
- for amide: (meth)acrylamide
- for imide: maleimide
- for cyclic carbonate: glyceryl (meth)acrylate carbonate
- for phosphate: optionally alkoxylated phosphate mono- and/or diesters of hydroxyalkyl (meth)acrylates
- for phosphonate: optionally alkoxylated phosphonate esters of hydroxyalkyl (meth)acrylates
- for phosphinate: optionally alkoxylated esters of hydroxyalkyl (meth)acrylates with phosphinic acid
- for sulfate: hydroxyalkyl (meth)acrylate esters, optionally with alkoxylated alkyl
- for sulfonate: optionally alkoxylated sulfonate esters of hydroxyalkyl (meth)acrylates or of hydroxyalkyl(meth)acrylamides, sulfonates such as hydroxyethyl (meth)acrylate sulfonate or acrylamide propane sulfonate (in acid or salt form)
- for imidazole: 2-ethyl-(2-oxoimidazolidin-1-yl) methacrylate
- for ureido: N-(2-methacryloyloxyethyl)ethyleneurea
- for oxazoline: hydroxyalkyl 2-oxazoline (meth)acrylates
- for benzophenone: benzophenone (meth)acrylate
- for aziridine: 1-(2-hydroxyethyl)aziridine methacrylate
- for acetoacetoxy: acetoacetoxyethyl (meth)acrylate (AAEM)
- for diacetone: diacetoneacrylamide (DAAM)
- for methylol: N-methylolacrylamide (NMA)
- for alkoxysilane: alkoxysilane (meth)acrylates.

5. Dispersion according to one of Claims 1 to 4, **characterized in that** said group X is a reactive group chosen from: acetoacetoxy, diacetone, N-methylol, alkoxysilane, with the preferred monomers bearing said group X being chosen from acetoacetoxyethyl (meth)acrylate (AAEM), diacetonediacrylamide (DAAM), N-methylolacrylamide and alkoxysilane (meth)acrylates.

6. Dispersion according to one of Claims 1 to 4, **characterized in that** said group X is chosen from: carboxy/anhydride, hydroxy, amine, epoxy (or oxirane), imide, aziridine, oxazoline, imidazole and cyclic carbonate.

7. Dispersion according to one of Claims 1 to 6, **characterized in that** the index of groups X expressed in mmol/g of polymer (polymer: P1 + P2 + P3) ranges from 0.002 to 0.5, preferably from 0.005 to 0.5, more preferentially from 0.01 to 0.5 and even more preferentially from 0.02 to 0.5.

8. Dispersion according to one of Claims 1 to 7, **characterized in that** said polymers P1, P2 and P3 are derived, respectively, from said monomer compositions M1, M2 and M3, constituted exclusively of (meth)acrylic monomers or of mixtures of (meth)acrylic monomers with at least one vinyl aromatic monomer, styrene being the preferred vinyl aromatic monomer and **in that** said polymer P1 is derived from a monomer composition M1 comprising at least one monomer as internal crosslinking agent.

9. Process for preparing a dispersion as defined in one of Claims 1 to 8, **characterized in that** said process comprises the following emulsion polymerization steps:

i) a seeding step comprising emulsion prepolymerization of a seed monomer composition M0, with the seed particles having a size of less than or equal to 40 nm and representing a weight content ranging from 2% to 25% and preferably from 5% to 20% of the weight of said polymer phase P1,

ii) a step of emulsion polymerization of a monomer composition M'1 giving a polymer P'1 thus constituting with the seed polymer P0 obtained in step i) said polymer phase P1 of said particle core, said monomer composition M'1 being identical to or different from said seed composition M0 (if identical to M0, it corresponds to that of said monomers M1) and their overall weight-average composition (M0 + M'1) corresponding to that of said monomers M1, the product of this step ii) (dispersion) optionally being able to be stored and used at a later time, as starting material for the following step iii),

iii) a step of emulsion polymerization of a monomer composition M2 giving rise to said polymer phase P2, said step iii) comprising at the start a seeding and optionally in the presence of a water-soluble transfer agent,

iv) a step of emulsion polymerization of a monomer composition M3 giving rise to said polymer phase P3, optionally in the presence of two transfer agents, one water-soluble and the other liposoluble, preferably chosen from mercaptans, so as to obtain said polymer P3 as an outer layer.

**10.** Process according to Claim 9, **characterized in that**:

- the seeding step i) is performed in the presence of from 0.01% to 0.5% and preferably from 0.05% to 0.2% by weight of an anionic surfactant relative to the total weight of P1 + P2 + P3
- the step of emulsion polymerization ii) of the monomer composition M'1 is performed in the presence of from 0.1% to 3% and preferably from 0.1% to 1.5% by weight, relative to the total weight of P1 + P2 + P3, of a first anionic surfactant which is identical to or different from that of the seed M0, and of a second anionic surfactant different from the first of this step ii), with the weight content of these two anionic surfactants of phase P1 being from 0.1% to 3% and preferably from 0.1% to 1.5% relative to the total weight of P1 + P2 + P3
- the step of emulsion polymerization iii) of the monomer composition M2 is performed in the presence of from 0.1% to 3% and preferably from 0.2% to 2.5% by weight, relative to the total weight of P1 + P2 + P3, of at least two surfactants a) and b) with a) being a first nonionic surfactant chosen from alkoxylated fatty alcohols, more preferentially alkoxylated $C_{12}$ to $C_{16}$ fatty alcohols, even more preferentially with ethoxy and/or propoxy units as alkoxy units, in particular ethoxy units and more particularly with the number of said alkoxy units being from 3 to 50 and even more particularly from 5 to 40 ethoxy units and b) being an anionic surfactant which may be identical to or different from those of step ii), with said step iii) comprising at the start a seeding and optionally (for said step iii)) in the presence of at least one water-soluble transfer agent,
- the step of polymerization iv) of said composition M3 is performed in the presence or absence of surfactants and if in the presence of surfactants, under the same conditions as those of step iii) and optionally in the presence of at least two transfer agents, of which one is water-soluble and one is liposoluble and **in that**:
- steps i) and ii) are performed at a temperature of from 75 to 90°C
- the step of polymerization iii) of said monomer composition M2, like the step of polymerization iv) of said monomer composition M3, is performed at a temperature below Tg1, when said process is performed at atmospheric pressure.

**11.** Process according to Claim 9 or 10, **characterized in that** step ii) of emulsion polymerization of the overall composition M1, giving the polymer P1, and step iii) of emulsion polymerization of said composition M2 giving the polymer P2 are continued to a degree of conversion of at least 95%, preferentially at least 98% and more preferentially 100% before addition of said monomer composition M3.

**12.** Aqueous polymer dispersion composition, **characterized in that** it comprises at least one aqueous dispersion as defined in one of Claims 1 to 8 or obtained via the process as defined in one of Claims 9 to 11.

**13.** Composition according to Claim 12, **characterized in that** said dispersion is a dispersion as defined in Claim 6 and **in that**, in the case where said group X is an acetoacetoxy or diacetone, said composition comprises in dispersion at least one additive bearing at least two groups that are reactive by latent reaction (during the drying film formation of the polymer particles) with said groups X, preferably said latent-reaction additive being a dihydrazide when X is a diacetone, in particular adipic acid dihydrazide, and, in the case where X is an acetoacetoxy, said additive preferably being a polyamine, in particular diamine or an acrylate ester that is multifunctional in acrylate groups (MFA).

**14.** Composition according to Claim 12 or 13, **characterized in that** it comprises, in addition to said dispersion, at least one other aqueous polymer dispersion, preferably with said other dispersion being a dispersion of resins or of polymers chosen from: dispersions of saturated and/or unsaturated polyesters, preferably based on unsaturated polyesters and more preferentially a dispersion of modified or unmodified alkyd resins, dispersion (emulsion) of acrylic copolymers, including purely acrylic and styrene-acrylic copolymers, dispersion of vinyl copolymers, dispersion of acryl acrylic oligomers, dispersion of polyurethanes including unsaturated polyurethanes, in particular acryl polyurethanes, dispersion of hydrocarbon resins or dispersion of colophony resins or of colophony-modified resins.

**15.** Composition according to one of Claims 12 to 14, **characterized in that** it comprises a dispersion as defined in Claim 6 and **in that**, in addition, it comprises at least one crosslinking agent bearing at least two groups that are reactive with said groups X.

16. Coating composition, **characterized in that** it comprises at least one aqueous dispersion as defined in one of Claims 1 to 8 or obtained via a process as defined in one of Claims 9 to 11, or a dispersion composition as defined in one of Claims 12 to 15.

17. Composition according to Claim 16, **characterized in that** it does not comprise any coalescer.

18. Use of a dispersion as defined in one of Claims 1 to 8 or obtained via a process as defined in one of Claims 9 to 11, as an organic binder for crosslinkable aqueous coatings, including self-crosslinkable coatings.

19. Use according to Claim 18, **characterized in that** it concerns industrial coatings, in particular protective coatings and/or decorative coatings, preferably chosen from: paints, varnishes, lacquers, primers, inks, adhesives and/or topcoats, and coatings for leakproofing, for treating glass, for treating fibers, in particular textile, or for treating wovens or nonwovens.

20. Coating, **characterized in that** it results from the use of at least one dispersion as defined in one of Claims 1 to 8 or obtained via a process as defined in one of Claims 9 to 11, or from the use of a dispersion composition as defined in one of Claims 12 to 15.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2011009560 A
- WO 2008028062 A
- WO 2012042153 A

**Littérature non-brevet citée dans la description**

- **W. M. MEYLAN ; P.H. HOWARD.** Atom/fragment contribution method for estimating octanol-water partition coefficients. *Pharm. Sci.,* 1995, vol. 84, 83-92